# DEMANDE DE BREVET EUROPEEN

(11) **EP 4 826 264 A1**
(43) Date de publication de la demande: **21.10.2026**
(21) Numéro de dépôt: 26172428.0
(22) Date de dépôt: 15.04.2026
(51) Int. Cl.: F16B 19/10

(54) **FIXATION POUR L'ASSEMBLAGE TEMPORAIRE DE STRUCTURES**

(30) Priorité: 15.04.2025 FR 2504000
(71) Demandeur: LISI Aerospace, 75012 Paris (FR)
(72) Inventeur: BRACHET, Julien, 18500 Mehun sur Yevre (FR)
(74) Mandataire: Lavoix

(57) **Abrégé**

L'invention concerne une fixation (10) pour l'assemblage temporaire de structures, comportant : un corps creux (14) tubulaire ; un élément d'accrochage (16) tubulaire, comprenant un corps de pince (24), une pluralité de pinces élastiques (26) et une tige filetée (28) ; un dispositif d'entraînement (18), mobile en rotation par rapport au corps creux et apte à coopérer avec la tige filetée (28) ; et un écarteur (20), disposé à l'intérieur de l'élément d'accrochage (16).

La tige filetée (28) de l'élément d'accrochage est disposée à l'intérieur du corps de pince (24), un espace annulaire (30) étant ménagé entre ladite tige filetée et ledit corps de pince, le dispositif d'entraînement (18) étant apte à se déplacer axialement dans ledit espace annulaire.

## Description

La présente invention concerne une fixation pour l'assemblage temporaire d'au moins deux structures préalablement percées, du type comportant : un corps creux tubulaire, s'étendant selon un axe principal ; un élément d'accrochage tubulaire, apte à coulisser axialement par rapport au corps creux ; ledit élément d'accrochage comprenant : un corps de pince ; une pluralité de pinces élastiques reliées à une extrémité dudit corps de pince, chaque pince comprenant un bec d'accrochage ; et une tige filetée ; un dispositif d'entraînement, mobile en rotation par rapport au corps creux et comportant un taraudage apte à coopérer avec la tige filetée de l'élément d'accrochage ; et un écarteur, disposé à l'intérieur de l'élément d'accrochage ; le corps creux et le corps de pince comprenant respectivement un premier et un deuxième moyens de blocage en rotation l'un par rapport à l'autre autour de l'axe principal.

L'invention s'applique particulièrement aux fixations temporaires de type agrafes d'épinglage.

Dans l'industrie aéronautique, avant de réaliser l'assemblage définitif de deux éléments de structure, il est connu de procéder à un assemblage provisoire desdits éléments au moyen de fixations temporaires insérées dans des trous traversants. De telles fixations temporaires sont notamment décrites dans le document EP4123187, au nom de la Demanderesse.

Une agrafe d'épinglage permet d'assembler des structures dont l'épaisseur totale est comprise entre une valeur minimale et une valeur maximale, un écart entre lesdites valeurs dépendant des caractéristiques de ladite agrafe. Les fixations temporaires décrites dans le document EP4123187 permettent notamment d'assembler des structures sur une large plage d'épaisseur totale.

L'invention a pour but d'améliorer les fixations existantes en limitant leur encombrement en longueur.

A cet effet, l'invention a pour objet une fixation du type précité, dans laquelle la tige filetée de l'élément d'accrochage est disposée à l'intérieur du corps de pince, un espace annulaire étant ménagé entre ladite tige filetée et ledit corps de pince, le dispositif d'entraînement étant apte à se déplacer axialement dans ledit espace annulaire.

Suivant d'autres aspects avantageux de l'invention, la fixation comporte l'une ou plusieurs des caractéristiques suivantes, prises isolément ou suivant toutes les combinaisons techniquement possibles :
- l'un du corps creux et du corps de pince comporte : une surface externe sensiblement cylindrique ; et au moins deux rainures ménagées longitudinalement dans ladite surface externe ; l'autre du corps creux et du corps de pince comporte au moins deux languettes longitudinales ; et la fixation est configurée de sorte que chaque languette est apte à coulisser axialement dans l'une des rainures ;
- le corps creux comporte la surface externe et les au moins deux rainures ; et le corps de pince comporte les au moins deux languettes longitudinales ;
- la tige filetée s'étend entre une première et une seconde extrémités, orientées respectivement vers la pluralité de pinces élastiques et vers le dispositif d'entraînement, la première extrémité de ladite tige filetée étant fixée à l'extrémité du corps de pince reliée aux pinces élastiques ;
- la tige filetée est de forme tubulaire et définit un espace interne s'étendant selon l'axe principal, l'écarteur étant mobile axialement dans ledit espace interne ;
- la tige filetée comprend au moins une fente longitudinale, ouvrant sur l'espace interne ; et la fixation comprend en outre un troisième moyen de blocage en rotation, solidaire du corps creux et apte à coulisser axialement dans l'au moins une fente longitudinale ;
- le corps creux comprend une ouverture frontale, orientée vers la pluralité de pinces élastiques, ladite ouverture frontale comprenant une première forme anti-rotation ; et la tige filetée comprend une deuxième forme anti-rotation, apte à coopérer avec la première forme anti-rotation pour guider un coulissement axial de ladite tige filetée dans l'ouverture frontale du corps creux ;
- la première forme anti-rotation comprend au moins un méplat interne inclus dans un bord de l'ouverture frontale du corps creux ; et la deuxième forme anti-rotation comprend au moins un méplat externe ménagé sur la tige filetée ;
- l'écarteur est fixe par rapport au corps creux ;
- l'écarteur est fixe par rapport au dispositif d'entraînement ;
- le corps creux comprend une tête élargie, destinée à venir en appui contre une première face des structures.

L'invention se rapporte en outre à un assemblage comprenant : des structures à assembler, comprenant une première et une seconde faces opposées, ainsi qu'un perçage débouchant sur chacune desdites première et seconde faces ; et une fixation telle que décrite ci-dessus, disposée dans le perçage, les becs d'accrochage desdites pinces étant disposés autour de l'écarteur, la tête du corps creux et les becs d'accrochage venant au contact respectivement de la première face et de la seconde face des structures.

L'invention apparaîtra plus clairement à la lecture de la description qui va suivre, donnée uniquement à titre d'exemple non limitatif, et faite en référence aux dessins dans lesquels :
- la figure 1 est une vue éclatée d'une fixation selon un premier mode de réalisation de l'invention, dans une première configuration ;
- la figure 2 est une vue en coupe de la fixation de la figure 1, dans la première configuration ;
- la figure 3 est une vue en perspective d'une fixation selon un deuxième mode de réalisation de l'invention, dans la première configuration ; et
- la figure 4 est une vue en coupe d'un assemblage comprenant la fixation de la figure 3, dans une deuxième configuration.

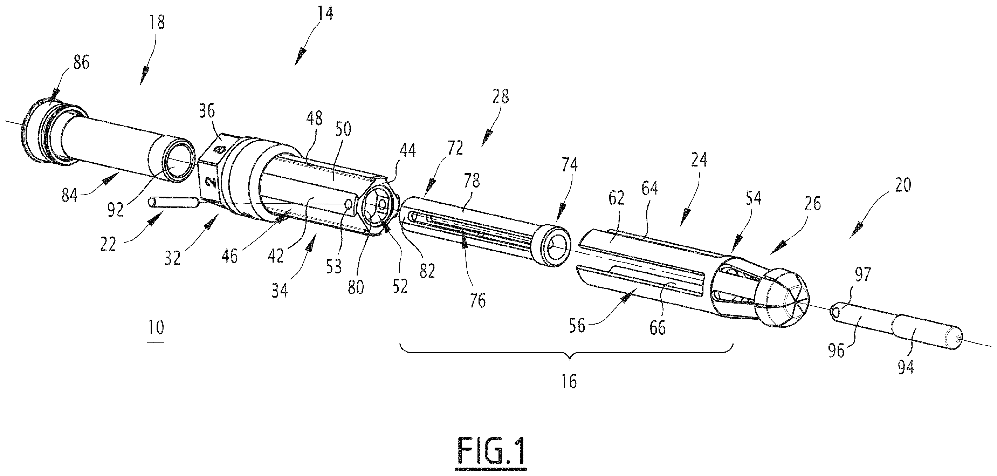

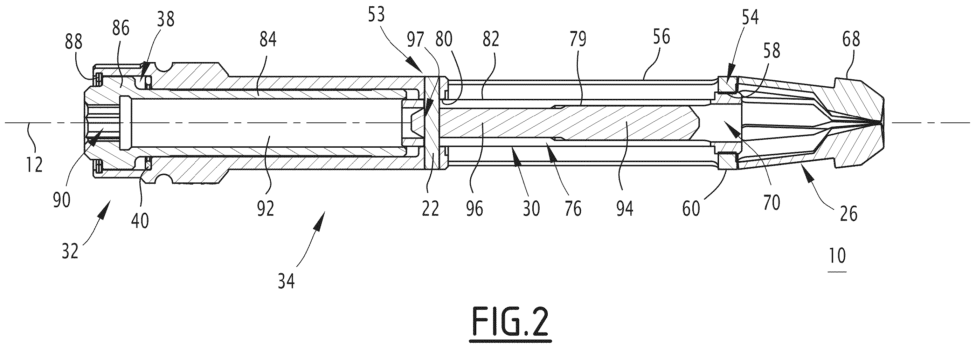

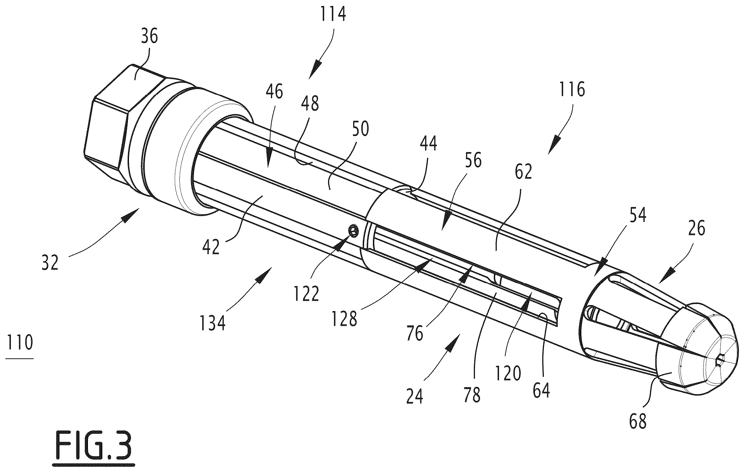

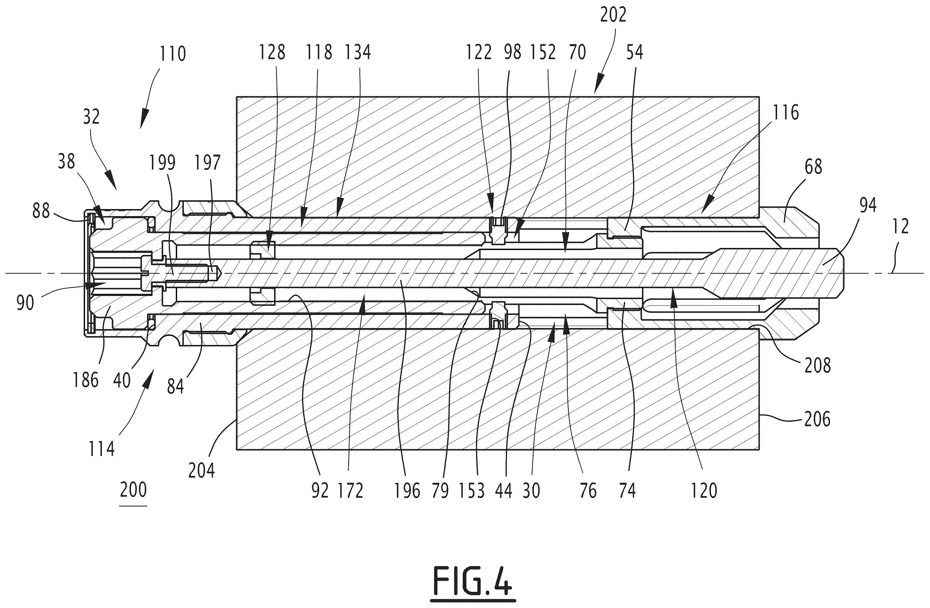

Les figures 1 et 2 représentent une fixation 10 selon un premier mode de réalisation de l'invention. Les figures 3 et 4 représentent une fixation 110 selon un deuxième mode de réalisation de l'invention. Plus précisément, la figure 4 représente un assemblage 200 comprenant la fixation 110.

Chacune des fixations 10 et 110 est apte à assembler temporairement au moins deux structures 202 préalablement percées, pour former l'assemblage 200 (figure 4) ou un assemblage analogue, comme décrit dans le document EP4123187 précité.

Les fixations 10 et 110 seront décrites simultanément ci-après, les éléments communs étant désignés par les mêmes numéros de référence.

La fixation 10, 110 s'étend selon un axe principal 12 et comprend : un corps creux 14, 114 ; un élément d'accrochage 16, 116 ; un dispositif d'entraînement 18, 118 ; un écarteur 20, 120 ; et un organe de coulissement 22, 122.

Le corps creux 14, 114 a une forme tubulaire, s'étendant selon l'axe principal 12 entre deux extrémités ouvertes. Le corps creux 14, 114 sera décrit plus en détails ci-après.

L'élément d'accrochage 16, 116 comprend : un corps de pince 24 ; une pluralité de pinces élastiques 26 ; et une tige filetée 28, 128. Les pinces élastiques seront décrites ultérieurement.

Le corps de pince 24 s'étend selon l'axe principal 12 entre deux extrémités. Comme il sera précisé ci-après, le corps de pince 24 a une forme sensiblement tubulaire, les deux extrémités étant ouvertes.

En outre, comme il sera précisé ci-après, la tige filetée 28, 128 de l'élément d'accrochage 16, 116 est disposée à l'intérieur du corps de pince 24, un espace annulaire 30 étant ménagé entre ladite tige filetée et ledit corps de pince.

Par ailleurs, comme il sera précisé ci-après, le corps creux 14, 114 et l'élément d'accrochage 16, 116 sont bloqués en rotation l'un par rapport à l'autre autour de l'axe principal 12 et aptes à coulisser l'un par rapport à l'autre selon ledit axe principal.

Le corps creux 14, 114 des modes de réalisation représentés va être décrit plus précisément.

Le corps creux 14, 114 comprend une tête 32 élargie et un fût 34, 134 tubulaire. Dans la suite de la description, on considère que la tête 32 du corps creux 14, 114 représente une extrémité arrière dudit corps creux et de la fixation 10, 110, les termes « avant » et « arrière » s'entendant selon cette définition.

La tête 32 comporte des premières surfaces de montage 36, destinées à coopérer avec un outil d'installation (non représenté) de la fixation 10, 110 pour un blocage en rotation de la tête 32. Dans le mode de réalisation représentés, les premières surfaces de montage 36 sont formées par six pans.

La tête 32 comporte en outre une cavité arrière 38 ouverte, délimitée axialement par un épaulement 40.

Le fût 34, 134 tubulaire comprend un premier moyen de blocage en rotation du corps creux 14, 114 et de l'élément d'accrochage 16, 116 l'un par rapport à l'autre. Plus précisément, le fût 34, 134 tubulaire comprend : une surface externe 42, sensiblement cylindrique de révolution autour de l'axe principal 12 ; une face avant 44, sensiblement plane et perpendiculaire à l'axe principal 12 ; et au moins deux rainures 46, ménagées longitudinalement dans la surface externe 42 et débouchant sur la face avant 44. Lesdites rainures 46 forment le premier moyen de blocage en rotation.

Chaque rainure 46 comporte : deux premiers bords longitudinaux 48 ; et un fond 50, disposé entre lesdits premiers bords longitudinaux. Les premiers bords longitudinaux 48 et le fond 50 sont de préférence sensiblement plans et parallèles à l'axe principal 12.

Les rainures 46 sont préférentiellement de formes analogues les unes aux autres et réparties angulairement de manière régulière autour de l'axe principal 12. Dans les modes de réalisation représentés, le fût 34, 134 tubulaire comprend quatre rainures 46.

Le fût 34, 134 tubulaire comprend en outre une ouverture frontale 52, 152, ménagée dans la face avant 44. L'ouverture frontale 52, 152 sera décrite ultérieurement.

Le fût 34, 134 tubulaire comprend également deux orifices 53, 153, traversant transversalement la surface externe 42 dudit fût 34, 134 et sensiblement symétriques l'un de l'autre par rapport à l'axe principal 12. Les orifices 53, 153 sont axialement proches de la face avant 44 du fût 34, 134 et angulairement disposés à l'écart des rainures 46.

L'élément d'accrochage 16, 116 des modes de réalisation représentés va être décrit plus précisément.

Le corps de pince 24 de l'élément d'accrochage 16, 116 comprend un deuxième moyen de blocage en rotation du corps creux 14, 114 et de l'élément d'accrochage 16, 116 l'un par rapport à l'autre, apte à coopérer avec le premier moyen de blocage en rotation porté par le fût 34, 134 tubulaire.

Plus précisément, le corps de pince 24 comprend une bague 54 et au moins deux languettes 56.

La bague 54 est disposée autour de l'axe principal 12 et forme une extrémité avant du corps de pince 24. La bague 54 comprend une surface interne 58 et une surface externe 60 sensiblement cylindriques de révolution.

De préférence, la surface interne 58 de la bague 54 comprend un moyen de fixation à la tige filetée 28, 128, comme il sera décrit ci-après.

Les languettes 56 forment le deuxième moyen de blocage en rotation décrit ci-dessus. Plus précisément, chacune des languettes 56 s'étend vers l'arrière à partir de la bague 54, parallèlement à l'axe principal 12. Une surface externe 62 de chacune des languettes prolonge la surface externe 60 sensiblement cylindrique de la bague.

Les languettes 56 sont espacées angulairement les unes des autres. Chaque languette 56 comporte deux deuxièmes bords longitudinaux 64 et une surface interne 66, disposée entre lesdits deuxièmes bords longitudinaux. Les deuxièmes bords longitudinaux 64 et la surface interne 66 sont de préférence sensiblement plans et parallèles à l'axe principal 12.

Les languettes 56 sont préférentiellement de formes analogues les unes aux autres et réparties angulairement de manière régulière autour de l'axe principal 12.

Chaque languette 56 du corps de pince 24 est apte à coulisser axialement dans une rainure 46 du fût 34, 134 du corps creux 14, 114, au cours du coulissement axial du corps creux 14, 114 et de l'élément d'accrochage 16, 116 l'un par rapport à l'autre. De préférence, le nombre de languettes 54 est égal au nombre de rainures 46 dudit fût 34, 134.

Plus précisément, les deuxième bords longitudinaux 64 et la surface interne 66 de chaque languette 56 sont aptes à coulisser axialement contre les premiers bords longitudinaux 48 et le fond 50 de l'une des rainures 46. Le corps creux 14, 114 et l'élément d'accrochage 16, 116 sont ainsi bloqués en rotation et mobiles en translation axiale l'un par rapport à l'autre.

De préférence, la surface externe 62 de chacune des languettes 56 s'inscrit dans un cylindre continu avec la surface externe 42 du fût 34, 134 tubulaire du corps creux 14, 114.

Dans une première configuration de la fixation 10, 110, visible sur les figures 1 à 3, une extrémité arrière de chaque languette 56 est disposée proche d'une extrémité avant de la rainure 46 correspondante. Dans une deuxième configuration de la fixation 10, 110, visible sur la figure 4 pour la fixation 110, ladite extrémité arrière de chaque languette 56 est disposée proche d'une extrémité arrière de la rainure 46 correspondante.

Chacune des pinces élastiques 26 de l'élément d'accrochage 16, 116 s'étend axialement entre une extrémité avant et une extrémité arrière. L'extrémité arrière de chaque pince élastique 26 est fixée à la bague 54 du corps de pince 24. L'extrémité avant de chaque pince élastique 26 comporte un bec d'accrochage 68, en saillie radiale à l'opposé de l'axe principal 12.

Les pinces élastiques 26 sont sensiblement identiques et réparties de manière régulière autour de l'axe principal 12. Dans les modes de réalisation représenté, les pinces élastiques 26 sont au nombre de six.

Les pinces élastiques 26 sont déformables entre une conformation rétractée et une conformation déployée. Dans la conformation rétractée, visible sur les figures 1 à 3, les becs d'accrochage 68 des pinces adjacentes sont en contact. Dans la conformation déployée, visible sur la figure 4, les becs d'accrochage 68 sont écartés latéralement les uns des autres. La conformation rétractée correspond à une configuration des pinces élastiques 26 au repos, sans contrainte extérieure.

Comme il sera précisé ci-après, dans les première et deuxième configurations de la fixation 10, 110, les pinces élastiques 26 sont respectivement dans la conformation rétractée et dans la conformation déployée.

La tige filetée 28, 128 de l'élément d'accrochage 16, 116 est de forme tubulaire et définit un espace interne 70, ouvert aux deux extrémités de ladite tige filetée 28, 128.

Plus précisément, la tige filetée 28, 128 comprend une portion principale 72, 172 et une portion avant 74. L'espace annulaire 30 est délimité radialement par la surface extérieure de la portion principale 72, 172 de la tige filetée 28, 128, d'une part, et par les surfaces internes 66 des languettes 56 du corps de pince 24, d'autre part.

La portion principale 72, 172 comprend au moins une fente longitudinale 76, ouvrant sur l'espace interne 70. L'au moins une fente longitudinale 76 s'étend parallèlement à l'axe principal 12, entre une extrémité avant et une extrémité arrière fermées.

De préférence, comme dans les modes de réalisation représentés, la portion principale 72, 172 comprend deux fentes longitudinales 76, symétriques l'une de l'autre par rapport à l'axe principal 12.

La portion principale 72, 172 comprend en outre un premier filetage externe 78, traversé par l'au moins une fente longitudinale 76.

Dans les modes de réalisation représenté, la portion principale 72, 172 de la tige filetée 28, 128 comprend en outre un épaulement interne 79, orienté vers l'avant et délimitant partiellement l'espace interne 70.

La portion avant 74 de la tige filetée 28, 128 est solidaire du corps de pince 24, de manière à former l'élément d'accrochage 16, 116. De préférence, la portion avant 74 est fixée à la surface interne 58 de la bague. Selon un mode de réalisation, la portion avant 74 de la tige filetée 28, 128 comprend un deuxième filetage externe ; et la surface interne 58 de la bague 54 comprend un taraudage coopérant avec ledit deuxième filetage externe.

La portion principale 72, 172 de la tige filetée 28, 128 est apte à coulisser axialement dans l'ouverture frontale 52, 152 du fût 34, 134 tubulaire au cours du coulissement axial, décrit ci-dessus, du corps creux 14, 114 et de l'élément d'accrochage 16, 116 l'un par rapport à l'autre.

Le dispositif d'entraînement 18, 118 des modes de réalisation représentés va être décrit plus précisément.

Le dispositif d'entraînement 18, 118, également appelé « tirant » dans la description, s'étend selon l'axe principal 12 et est mobile en rotation à l'intérieur du corps creux 14, 114.

Dans les modes de réalisation représenté, le tirant 18, 118 comporte une portion principale 84 et une portion arrière 86, 186 élargie. La portion arrière 86, 186 est disposée dans la cavité arrière 38 de la tête 32 élargie du corps creux 14, 114.

Selon un mode de réalisation non représenté, le tirant 18, 118 est bloqué en translation axiale par rapport au corps creux 14, 114. Dans les modes de réalisation représentés, la portion arrière 86, 186 du tirant 18, 118 dispose d'une faible course axiale dans la cavité arrière 38 de la tête 32, entre l'épaulement 40 et un jonc 88 qui bloque ladite portion arrière 86, 186 dans ladite cavité arrière 38. Dans les première et deuxième configurations de la fixation 10, 110, la portion arrière 86, 186 du tirant 18, 118 est respectivement à une première et à une deuxième distances axiales de l'épaulement 40 de la cavité arrière 38, la deuxième distance axiale étant inférieure à la première distance axiale.

Une extrémité arrière du tirant 18, 118 comporte des deuxièmes surfaces de montage, destinées à coopérer avec l'outil d'installation mentionné ci-dessus, pour entraîner en rotation le tirant 18, 118 par rapport au corps creux 14, 114. Dans les modes de réalisation représentés, les deuxièmes surfaces de montage sont formées par une empreinte axiale 90.

Le tirant 18, 118 est en liaison hélicoïdale avec l'élément d'accrochage 16, 116, la rotation du tirant étant ainsi apte à faire coulisser axialement ledit élément d'accrochage par rapport au corps creux 14, 114. Dans le mode de réalisation représenté, le tirant 18, 118 est tubulaire avec deux extrémités ouvertes, et comporte un taraudage 92 sur la surface interne de la portion principale 84. Le taraudage 92 est apte à coopérer avec le premier filetage externe 78 de la portion principale 72, 172 de la tige filetée 28, 128.

L'écarteur 20, 120 des modes de réalisation représentés va être décrit plus précisément.

L'écarteur 20, 120 comporte une partie avant 94 et une partie arrière 96, 196, adjacentes selon l'axe principal 12. Chacune des parties avant 94 et arrière 96, 196 a une forme cylindrique, préférentiellement cylindrique de révolution. De préférence, un diamètre de la partie avant 94 est supérieur à un diamètre de la partie arrière 96, 196.

La partie arrière 96, 196 de l'écarteur 20, 120 comporte un perçage 97, 197 qui sera décrit ultérieurement.

L'écarteur 20, 120 est disposé dans l'espace interne 70 de la tige filetée 28, 128 et mobile axialement par rapport à ladite tige filetée 28, 128, comme décrit plus précisément ci-après.

Dans la première configuration de la fixation 10, 110, visible sur les figures 1 à 3, la partie avant 94 de l'écarteur 20, 120 est en butée arrière contre l'épaulement interne 79 de la portion principale 72, 172 de la tige filetée 28, 128. Par ailleurs, dans la première configuration de la fixation 10, 110, la partie avant 94 de l'écarteur 20, 120 est axialement située en arrière des becs d'accrochage 68 des pinces élastiques 26. Lesdites pinces élastiques 26 sont alors dans la conformation rétractée décrite ci-dessus.

Dans la deuxième configuration de la fixation 10, 110, visible sur la figure 4, les becs d'accrochage 68 des pinces élastiques 26 sont axialement alignés avec la partie avant 94 de l'écarteur 20, 120, et disposés autour de ladite partie avant 94. Les pinces élastiques 26 sont alors dans la conformation déployée décrite ci-dessus.

Comme il sera décrit plus en détail ci-après, l'organe de coulissement 22, 122 de la fixation 10, 110 est fixé au corps creux 14, 114 et comporte au moins une saillie radiale apte à traversant l'au moins une fente longitudinale 76 de la portion principale 72, 172 de la tige filetée 28, 128. L'organe de coulissement 22, 122 forme ainsi un moyen de blocage en rotation de l'élément d'accrochage 16, 116 par rapport au corps creux 14, 114.

Lorsque la fixation 10, 110 passe de la première à la deuxième configuration et inversement, ladite tige filetée 28, 128 est ainsi apte à coulisser axialement à l'intérieur du corps creux 14, 114 et autour de l'écarteur 20, 120, simultanément au coulissement des languettes 56 du corps de pince 24 dans les rainures 46 du fût 34, 134 du corps creux 14, 114.

Dans la première configuration de la fixation 10, 110, l'organe de coulissement 22, 122 est disposé au niveau de l'extrémité arrière de l'au moins une fente longitudinale 76. Dans la deuxième configuration de la fixation 10, 110, l'organe de coulissement 22, 122 est proche ou au contact de l'extrémité avant de l'au moins une fente longitudinale 76.

La fixation 10 des figures 1 et 2 va à présent être décrite plus précisément.

Dans le mode de réalisation des figures 1 et 2, l'écarteur 20 est fixe par rapport au corps creux 14. Plus précisément, dans le mode de réalisation des figures 1 et 2, le perçage 97 de la partie arrière 96 de l'écarteur 20 est disposé transversalement par rapport à l'axe principal 12 ; et l'organe de coulissement 22 est une goupille qui traverse à la fois les orifices 53 du fût 34 tubulaire, à proximité de la face avant 44, et ledit perçage 97 de la partie arrière 96 de l'écarteur 20. La goupille 22 maintient ainsi l'écarteur 20 fixe par rapport au corps creux 14.

De plus, la goupille 22 traverse les fentes longitudinales 76 de la portion principale 72 de la tige filetée 28, formant un moyen de blocage en rotation de l'élément d'accrochage 16 par rapport au corps creux 14.

Dans le mode de réalisation des figures 1 et 2, la fixation 10 comprend un moyen supplémentaire de blocage en rotation de l'élément d'accrochage 16 par rapport au corps creux 14. Plus précisément, l'ouverture frontale 52 du fût 34 tubulaire comprend une première forme anti-rotation 80 ; et la portion principale 72 de la tige filetée 28 comprend une deuxième forme anti-rotation 82, apte à coopérer avec la première forme anti-rotation 80 pour bloquer la rotation de l'élément d'accrochage 16 par rapport au corps creux 14. Une telle coopération améliore également l'alignement de l'élément d'accrochage 16 avec l'axe principal 12, afin de faciliter le coulissement axial de ladite tige dans l'ouverture frontale 52 du corps creux.

En particulier, dans le mode de réalisation des figures 1 et 2, la première forme anti-rotation comprend au moins un méplat interne 80, ménagé à l'extrémité avant du fût 34 tubulaire et formant partiellement un bord de l'ouverture frontale 52 ; et la deuxième forme anti-rotation comprend au moins un méplat externe 82 ménagé longitudinalement sur la portion principale 72, 172 de la tige filetée 28, 128. Chacun des méplats interne 80 et externe 82 est plan et parallèle à l'axe principal 12.

De préférence, la première forme anti-rotation comprend deux méplats internes 80 symétriques l'une de l'autre par rapport à l'axe principal 12 ; et la deuxième forme anti-rotation comprend deux méplats externes 82 symétriques l'une de l'autre par rapport à l'axe principal 12. Dans le mode de réalisation des figures 1 et 2, la goupille 22 traverse les méplats internes 80 du fût 34 tubulaire ; et chaque fente longitudinale 76 de la portion principale 72, 172 de la tige filetée 28, 128 est ménagée au niveau d'un méplat externe 82.

La fixation 110 des figures 3 et 4 va à présent être décrite plus précisément.

Dans le mode de réalisation des figures 3 et 4, l'écarteur 120 est fixe par rapport au tirant 118. Plus précisément, dans le mode de réalisation des figures 3 et 4, le perçage 197 de la partie arrière 196 de l'écarteur 120 est réalisé axialement et orienté vers l'arrière ; et la fixation 110 comprend en outre une vis 199, disposée dans ledit perçage 197 et qui assemble l'écarteur 120 à la portion arrière 186 du tirant 118. La portion principale 84 dudit tirant 118 est disposée autour de ladite partie arrière 196 de l'écarteur 120.

Par ailleurs, dans le mode de réalisation des figures 3 et 4, l'organe de coulissement 122 est formé par deux pions 98, alignés perpendiculairement à l'axe principal 12. Chaque pion 98 est disposé dans l'un des orifices 153 du fût 134 tubulaire du corps creux 114 et forme une saillie interne par rapport audit fût tubulaire, à proximité de la face avant 44. Les pions 98 sont disposés de part et d'autre de la partie arrière 196 de l'écarteur 120.

De plus, chaque pion 98 est disposé dans l'une des fentes longitudinales 76 de la portion principale 172 de la tige filetée 128, formant un moyen de blocage en rotation de l'élément d'accrochage 116 par rapport au corps creux 114.

En outre, les pions 98 retiennent axialement la tige filetée 128 dans le corps creux 114 afin d'assurer que le taraudage 92 du tirant 118 s'engage toujours avec le premier filetage externe 78 de la tige filetée. Sans les pions 98, un déplacement du tirant 118 vers l'avant pousserait la tige filetée 128 vers l'avant, rendant impossible l'engagement des filets du tirant et de la tige filetée.

Selon un mode de réalisation, les orifices 153 du fût 134 tubulaire sont taraudés ; et les pions 98 sont réalisés sous la forme de vis avec une empreinte d'entrainement.

Par ailleurs, dans le mode de réalisation des figures 3 et 4, l'ouverture frontale 152 du fût 134 tubulaire présente une forme circulaire et ne comprend pas de forme anti-rotation. Le blocage en rotation de l'élément d'accrochage 116 par rapport au corps creux 114 est réalisé uniquement par l'ensemble rainures 46 / languettes 56 et par l'interaction entre l'organe de coulissement 122 et l'élément d'accrochage 116, comme décrit ci-dessus.

De même, dans le mode de réalisation des figures 3 et 4, la portion principale 172 de la tige filetée 128 présente une section sensiblement circulaire et ne comporte pas de méplat.

Selon une variante de réalisation non représentée, la fixation 110 décrite ci-dessus comporte les première et deuxième formes 80, 82 anti-rotation décrites ci-dessus pour la fixation 10.

Un procédé d'installation de la fixation 10, 110 dans les structures 202 va maintenant être décrit.

Les structures 202, représentées en un seul bloc à la figure 4, définissent deux faces 204, 206 opposées. Un perçage 208 traverse les structures 202 depuis la première 204 jusqu'à la deuxième 206 face.

Au début du procédé d'installation, la fixation 10, 110 est dans la première configuration des figures 1 à 3.

La fixation 10, 110 est introduite dans le perçage 208 desdites structures 202, de sorte que la tête 32 élargie du corps creux 14, 114 vienne en butée contre la première face 204 et que les pinces élastiques 26 forment une saillie par rapport à la deuxième face 206.

Un effort axial est ensuite appliqué sur la tête 32 élargie, de sorte à la plaquer contre la première face desdites structures, tout en étant bloquée en rotation par une action sur les premières surfaces de montage 36.

En parallèle, le tirant 18, 118 est entraîné en rotation par rapport à la tête 32 élargie, par application d'un couple de rotation sur ledit tirant par l'intermédiaire de l'empreinte axiale 90.

Le taraudage 92 du tirant s'engage alors sur le premier filetage externe 78 de la tige filetée 28, 128. Ladite tige filetée 28, 128 se déplace donc vers la tête 32 élargie du corps creux 14, 114, entraînant l'ensemble de l'élément d'accrochage 16, 116. Plus précisément, les languettes 56 du corps de pince 24 sont entraînées en coulissement vers l'arrière dans les rainures 46 du fût 34, 134 du corps creux 14, 114.

Le blocage en rotation de l'élément d'accrochage 16, 116 par rapport au corps creux 14, 114 est préférentiellement réalisé par deux mécanismes de reprise d'effort de couple, d'une part les premiers 48 et deuxièmes 64 bords longitudinaux des rainures 46 et des languettes 56, d'autre part l'organe de coulissement 22, 122 dans les fentes longitudinales 76 de la portion principale 72, 172 de la tige filetée 28, 128.

Au cours du déplacement axial de l'élément d'accrochage 16, 116 par rapport au corps creux 14, 114, la portion principale 84 du tirant 18, 118 se déplace axialement dans l'espace annulaire 30 ménagé entre la tige filetée 28, 128 et le corps de pince 24.

En raison du déplacement de l'élément d'accrochage 16, 116 par rapport au corps creux 14, 114, les becs d'accrochage 68 des pinces élastiques 26 arrivent axialement en vis-à-vis de la partie avant 94 de l'écarteur 20, 120. Les pinces élastiques 26 se déforment donc jusqu'à la conformation déployée décrite ci-dessus, de sorte que les becs d'accrochage 68 forment un cercle de diamètre supérieur au diamètre du perçage des structures. Les becs d'accrochage 68 sont alors en saillie radiale par rapport audit perçage.

L'entraînement en rotation du tirant 18, 118 étant poursuivi, les becs d'accrochage 68 arrivent en appui axial contre la deuxième face des structures, autour du perçage.

Si l'entraînement en rotation du tirant 18, 118 est alors poursuivi, la portion arrière 86, 186 du tirant se déplace axialement vers l'avant dans la cavité arrière 38 de la tête 32, en direction de l'épaulement 40. Un effort de compression est ainsi appliqué à la fixation 10, 110, de manière à serrer les unes contre les autres les structures à assembler.

Dans la fixation 10, 110 décrite ci-dessus, la disposition de la tige filetée 28, 128 à l'intérieur du corps de pince 24 permet à ladite tige filetée de présenter une longueur axiale analogue à celle des languettes 56, sans augmenter la longueur totale de l'élément d'accrochage 16, 116.

Un tel élément d'accrochage 16, 116, par ailleurs coulissant et de même diamètre que celui du corps creux 14, 114, permet ainsi de disposer d'une grande amplitude de serrage entre les épaisseurs des structures à assembler, tout en présentant une longueur faible de la fixation dans la première configuration.

## Revendications

1. Fixation (10, 110) pour l'assemblage temporaire d'au moins deux structures préalablement percées, ladite fixation comprenant :
- un corps creux (14, 114) tubulaire, s'étendant selon un axe principal (12) ;
- un élément d'accrochage (16, 116) tubulaire, apte à coulisser axialement par rapport au corps creux ; ledit élément d'accrochage comprenant : un corps de pince (24) ; une pluralité de pinces élastiques (26) reliées à une extrémité (54) dudit corps de pince, chaque pince comprenant un bec d'accrochage (68) ; et une tige filetée (28, 128) ;
- un dispositif d'entraînement (18, 118), mobile en rotation par rapport au corps creux (14, 114) et comportant un taraudage (92) apte à coopérer avec la tige filetée (28, 128) de l'élément d'accrochage (16, 116) ; et
- un écarteur (20, 120), disposé à l'intérieur de l'élément d'accrochage (16) ;
le corps creux (14, 114) et le corps de pince (24) comprenant respectivement un premier (46) et un deuxième (56) moyens de blocage en rotation l'un par rapport à l'autre autour de l'axe principal (12) ;
la fixation étant **caractérisée en ce que** la tige filetée (28, 128) de l'élément d'accrochage (16, 116) est disposée à l'intérieur du corps de pince (24), un espace annulaire (30) étant ménagé entre ladite tige filetée (28, 128) et ledit corps de pince (24), le dispositif d'entraînement (18, 118) étant apte à se déplacer axialement dans ledit espace annulaire.

2. Fixation selon la revendication 1, dans laquelle : l'un (14, 114) du corps creux et du corps de pince comporte : une surface externe (42) sensiblement cylindrique ; et au moins deux rainures (46) ménagées longitudinalement dans ladite surface externe ; l'autre (24) du corps creux et du corps de pince comporte au moins deux languettes (56) longitudinales ; et la fixation est configurée de sorte que chaque languette (56) est apte à coulisser axialement dans l'une des rainures (46).

3. Fixation selon la revendication 2, dans laquelle : le corps creux (14, 114) comporte la surface externe (42) et les au moins deux rainures (46) ; et le corps de pince (24) comporte les au moins deux languettes (56) longitudinales.

4. Fixation selon l'une des revendications précédentes, dans laquelle : la tige filetée (28, 128) s'étend entre une première (74) et une seconde extrémités, orientées respectivement vers la pluralité de pinces élastiques (26) et vers le dispositif d'entraînement (18, 118), la première extrémité (74) de ladite tige filetée étant fixée à l'extrémité (54) du corps de pince (24) reliée aux pinces élastiques.

5. Fixation selon l'une des revendications précédentes, dans laquelle la tige filetée (28, 128) est de forme tubulaire et définit un espace interne (70) s'étendant selon l'axe principal (12), l'écarteur (20, 120) étant mobile axialement dans ledit espace interne.

6. Fixation selon la revendication 5, dans laquelle : la tige filetée (28, 128) comprend au moins une fente longitudinale (76), ouvrant sur l'espace interne ; et la fixation comprend en outre un troisième moyen (22, 122) de blocage en rotation, solidaire du corps creux (14, 114) et apte à coulisser axialement dans l'au moins une fente longitudinale.

7. Fixation (10) selon l'une des revendications précédentes, prise en combinaison avec la revendication 3, dans laquelle : le corps creux (14) comprend une ouverture frontale (52), orientée vers la pluralité de pinces élastiques (26), ladite ouverture frontale comprenant une première forme anti-rotation (80) ; et la tige filetée (28) comprend une deuxième forme anti-rotation (82), apte à coopérer avec la première forme anti-rotation pour guider un coulissement axial de ladite tige filetée (28) dans l'ouverture frontale (52) du corps creux (14).

8. Fixation (10) selon la revendication 7 prise en combinaison avec la revendication 6, dans laquelle : la première forme anti-rotation comprend au moins un méplat interne (80) inclus dans un bord de l'ouverture frontale (52) du corps creux (14) ; et la deuxième forme anti-rotation comprend au moins un méplat externe (82) ménagé sur la tige filetée (28).

9. Fixation (10) selon l'une des revendications précédentes, dans laquelle l'écarteur (20) est fixe par rapport au corps creux (14).

10. Fixation (110) selon l'une des revendications 1 à 8, dans laquelle l'écarteur (120) est fixe par rapport au dispositif d'entraînement (118).

11. Fixation (10, 110) selon l'une des revendications précédentes, dans laquelle le corps creux (14, 114) comprend une tête (32) élargie, destinée à venir en appui contre une première face des structures.

12. Assemblage (200) comportant : des structures (202) à assembler, comprenant une première (204) et une seconde (206) faces opposées, ainsi qu'un perçage (208) débouchant sur chacune desdites première et seconde faces ; et une fixation (10, 110) selon la revendication 11, la pluralité de pinces élastiques (26) étant disposée dans le perçage (208), les becs d'accrochage (68) desdites pinces étant disposés autour de l'écarteur (20, 120), la tête (32) et les becs d'accrochage venant au contact respectivement de la première face (204) et de la seconde face (206) des structures.
